# EUROPEAN PATENT APPLICATION

(11) **EP 0 668 666 A2**
(43) Date of publication of application: **23.08.1995**
(21) Application number: 95830048.5
(22) Date of filing: 21.02.1995
(51) Int. Cl.: H04B 7/204

(54) **Channel switch operating in the frequency domain, particularly suitable for satellite applications**

(30) Priority: 22.02.1994 IT RM940090
(71) Applicant: SPACE ENGINEERING S.p.A., I-00155 Roma (IT)
(72) Inventor: Chiassarini, Giuseppe, I-00155 Roma (IT)
(74) Representative: Perrotta, Luciana, Dr.

(57) **Abstract**

Channel switch, operating in the frequency domain, particularly suitable for satellite applications, essentially consisting (Fig. 3) of calculation processors (7) (DFT), a switching matrix (10), other calculation processors (IDFT). This switch is particularly suited for the switching of transmission channels, through the application of specific algorithms used in digital signal processing. The invention can be applied all sectors envisaging a transmission channel switching unit, some sets of input channels and some sets of output channels. In each set, the channels are distinguished by the frequency band they occupy. The invention is particularly useful for communications satellites, since it allows significant reductions in weight and in power consumption with respect to previous solutions.

## Description

The invention relates to the switching of transmission channels in the frequency domain, utilising specific algorithms used in the digital processing of signals.

This invention applies to all of those sectors which foresee a switching unit from some sets of input channels to other sets of output channels. In each set, the channels are distinguished by means of the frequency band occupied.

The switching unit is one of the most important and advanced functions for communication satellites.

This function is linked to the type of coverage adopted: current satellites are usually designed and positioned so as to identify on the earth's surface several areas in which it is possible to receive and/or transmit only using different bands from terminal to terminal. These areas are called spots and are defined in relation to traffic distribution. Since this distribution can change in time according to transitory traffic needs, or even due to evolution in the services, it is of primary importance that the satellite be capable of adapting to the various distributions.

From this viewpoint, the ideal satellite is that which allows to concentrate its resources each time where traffic demand is highest.

Traffic demand translates into the demand for a given number of transmission channels and, in short, in the demand for a given band of frequencies which are assigned to the link between a spot and another spot.

In practice, the set of channels available for transmission in each spot on board the satellite, is subdivided into subsets. Each of these subsets is then transmitted to another spot (or even to the same spot).

Before being retransmitted, the subset is recombined with all the subsets coming from other spots and destined to the same spot.

This channel splitting and recombining operation can be performed in many ways and at various signal processing levels on board the satellite.

The first level can consist of the intermediate frequency signal, at which it is possible to operate only with analog signals and therefore using analog signals. This level, however, in general has such a low degree of flexibility that it cannot be appropriately called switching.

The second level can consist of the signal associated to a single or several transmission channels. This case refers to the most common concept of switching.

In the third level there is the addition to the second of the on-board capability of reconstructing the information travelling on the transmission channel, with some benefit to the ground reconstruction of said information. This approach, usually provides the best performance, at the cost, however, of considerable on-board and/or ground complications and of limited flexibility.

Let us focus our attention on the above mentioned "second" signal processing level.

To this regard, in the past, some solutions based on digital signal processing techniques have been proposed, capable of managing the signal associated to each channel in the time domain.

As briefly mentioned above, the solution I am proposing herein consists in managing the channel signals in the frequency domain, since simple and efficient algorithms already exist to this purpose.

The idea comes from the rearrangement of several switching units in the time domain which adopt fast convolution algorithms for signal filtering.

When a signal consisting of a modulated carrier is associated to a single channel (SCPC = Single Channel Per Carrier), the stations located in a single coverage area generate a set of these carriers, usually continuous in band. This set constitutes, at the satellite input, a single signal in the preassigned band - in this case, one speaks of frequency division access system or FDMA (Frequency Division Multiple Access) and of FDMA signal.

In order to be able to operate the switching, this FDMA signal is sent through a bank of filters capable of selecting the signal associated to each single channel.

This signal is then frequency-shifted, recombined with other signals, if any, coming from other areas and then retransmitted to the destination area.

All of these operations can be performed using digital processing techniques, by which each signal is represented by a time sequence of samples, with sampling frequency proportional to the signal's band.

The solution I propose herein is an application to the case of FDMA (Frequency Division Multiple Access) channels. However, it is also suitable for applications to TDMA (Time Division Multiple Access) channels. This feature is directly linked to the type of process based on the processing of separate signal segments and therefore segments which can be recombined in different ways for consecutive packages.

The most significant advantage provided by my invention, for which a patent is requested, consists in the simplification introduced in building the channel switch, by making it smaller and by reducing its power consumption requirements.

The invention also offers the following further advantages:
- prevailing use of efficient techniques for domain changing (Fast Fourier Transforms) which are widely known and studied;
- extreme flexibility in band switching and processing;
- possibility of foreseeing whatever kind of service, the only limitation consisting in the resolution of the frequency transform process;
- high function repetitivity with ensuing advantages for the redundancy strategy.

The following is a description of my invention, with reference to a version currently preferred by the Author and based on the diagrams enclosed and provided only by way of example and in no way limiting:

Fig. 1 schematically shows the traditional channel switch constructed using digital techniques. This diagram illustrates:
0 input signal amplifier
1 digital channel filter
2 decimator
3 switching matrix
4 interpolator
5 channel interpolation filter
6 channel adder.

Fig. 2 shows the exploded view of blocks 1 and 5 concerning "fast convolution". This diagram illustrates:
7 DFT calculation processor
8 spectral weighting block
9 IDFT calculation processor.

Fig. 3 shows the switch in the frequency domain. This diagram illustrates:
7 DFT calculation processor
9 IDFT calculation processor
10 switching matrix.

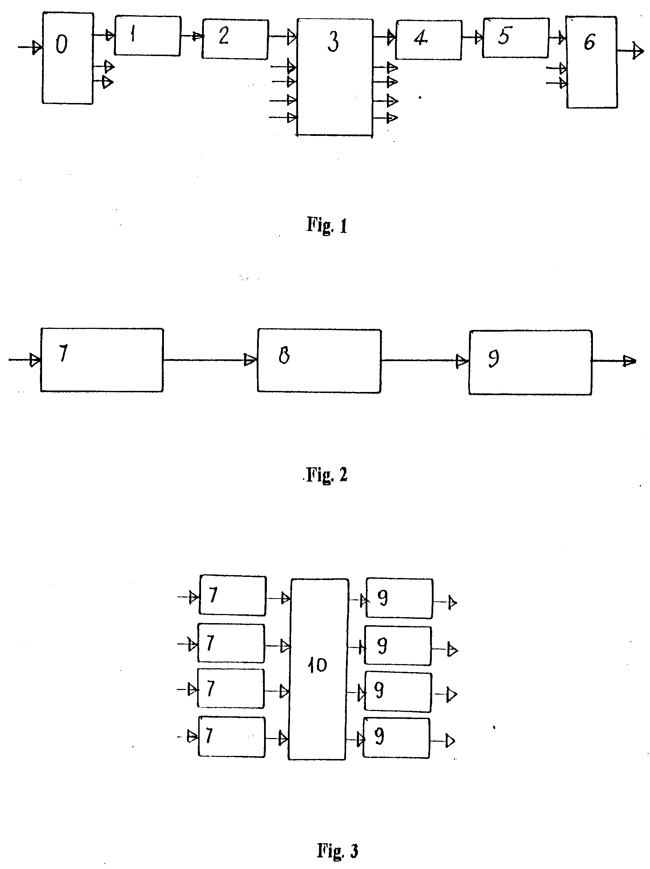

The satellite unit therefore consists of the following blocks (Fig. 1): an amplifier for the input signal (0) coming from a given spot; a digital channel filter (1) for selecting the wanted channel; a decimator (2) in order to reduce the sampling frequency to that actually required; a switching matrix (3) in order to establish the wanted connection; an interpolation block (4) with related channel interpolator filter (5); an adder block for adding all of the channels directed towards a given coverage area (6).

In order to create filters 1 and 5 it is possible to use a renown and effective technique called "fast convolution".

Fast convolution, as described in Fig. 2, foresees the following passages: input signal transformation from the time domain to the frequency domain (7); selection of the wanted signal which occupies a portion of the frequency band (8); reconstruction of the signal in the time domain (9).

Since the foreseen fast convolution occurs twice in cascade for each single channel, a first one for filter 1 and the second for filter 5, the solution involves four cascade transformers.

Notice that a traditional implementation such as that described above foresees a quadruple domain transformation for each channel: Time/Frequency, Frequency/Time, Time/Frequency, Frequency/Time. The idea I provide through this invention is to replace this quadruple transformation with a double transformation: Time/Frequency, Frequency/Time.

The idea also foresees the interposition between the two transformations of a channel switching block (10), normally different from block (3) which no longer operates in the time domain but rather in the frequency domain.

The idea gives rise to the channel switch structure shown in Fig. 3, which constitutes the invention presented herein.

The first block of the structure, similar to block (7) described above, is a device which calculates the DFT - Discrete Fourier Transform - of a time segment of the input signal. The block is composed using wellknown FFT (Fast Fourier Transform) algorithms and may include the application of a specific time window to improve the unit performances.

The output from the DFT block represents a sampled spectrum of the entire input signal which includes the various channels. The samples of one or more of these channels are selected by block (10), combined with other samples coming from other blocks (7) so as to recompose a complete band, and are finally sent towards one of the outputs of block (10).

The last block of the structure, similar to block (9) described above, is a device which calculates the IDFT - Inverse Discrete Fourier Transform - of a time segment of the input signal. The block is composed using FFT (Fast Fourier Transform) algorithms and may include also the application of a specific time window to improve the unit performances.

## Claims

1. Channel switch, featuring the capability of operating in the frequency domain, particularly suitable for satellite applications, essentially consisting of: calculation processors (7); a switching matrix (10); calculation processors (9).

2. Channel switch, according to Claim No. 1, featuring the fact that said processors (9) are preferably of type FFT - Fast Fourier Transform.

3. Channel switch, according to Claim No. 1, featuring the fact that said matrix also consists of a given number of inputs and outputs which are connected inside the matrix on the basis of prefixed commands.

4. Channel switch, according to Claim No. 1, featuring the fact that said processors (7) are of type IDFT - Inverse Discrete Fourier Transform.

5. Channel switch, according to Claim No. 1, featuring the fact that the digital channel filter (1) (Fig. 1 - traditional configuration) is replaced (Fig. 2) by the following elements: a FFT (Fast Fourier Transform) calculation type processor (7), a spectral weighting block (8), a IDFT (Inverse Discrete Fourier Transform) calculation type processor (9).
